# EUROPÄISCHE PATENTSCHRIFT

(11) **EP 2 824 047 B1**
(45) Veröffentlichungstag und Bekanntmachung des Hinweises auf die Patenterteilung: **20.06.2018**
(21) Anmeldenummer: 14174886.3
(22) Anmeldetag: 30.06.2014
(51) Int. Cl.: B65G 59/00, G01N 35/00, A63B 47/00, B65G 47/14, B07C 5/00, B01F 13/08

(54) **Vorrichtung zur Vereinzelung von kugel- oder zylinderförmigen Objekten**
Device for separating spherical or cylindrical objects
Dispositif pour séparer des objets en forme de boule ou de cylindre

(30) Priorität: 08.07.2013 EP 13175470; 30.07.2013 EP 13178460
(43) Veröffentlichungstag der Anmeldung: 14.01.2015
(73) Patentinhaber: Siemens Healthcare Diagnostics Products GmbH, 35041 Marburg (DE)
(72) Erfinder: Meindl, Josef, 65760 Eschborn (DE); Wilmes, Hugo, 65812 Bad Soden (DE)

(56) Entgegenhaltungen:
- EP-A1- 0 516 111
- EP-A1- 0 637 741
- EP-A1- 0 895 950
- EP-A2- 0 916 457
- EP-A2- 2 422 879
- WO-A1-83/00319
- DE-A1-102006 061 904
- FR-A1- 2 571 348
- US-A- 3 065 841
- US-A- 3 448 894
- US-A- 3 874 564
- US-B1- 6 849 457

## Beschreibung

Die Erfindung betrifft eine Vorrichtung zur Vereinzelung von kugel- oder zylinderförmigen Objekten im Allgemeinen und von magnetisch anziehbaren Rührkugeln oder Rührstäbchen in einem automatischen Analysegerät im Besonderen.

Zahlreiche Nachweis- und Analyseverfahren zur Bestimmung physiologischer Parameter in Körperflüssigkeitsproben wie Blut, Plasma, Serum oder Urin oder in anderen biologischen Proben werden heute automatisiert in entsprechenden Analysegeräten durchgeführt.

Heutige Analysegeräte sind in der Lage, eine Vielzahl verschiedenartiger Nachweisreaktionen und Analysen mit einer Vielzahl von Proben durchzuführen. Gängige Analysegeräte, wie sie im klinischen Labor oder in Blutbanken zum Einsatz kommen, umfassen üblicherweise einen Bereich für die Zuführung von Probengefäßen, die die zu analysierenden Primärproben enthalten. Zur Einspeisung der Probengefäße in das Analysegerät ist üblicherweise ein Transportsystem vorgesehen, das die Probengefäße zunächst zu einer Probenidentifikationseinrichtung transportiert, die probenspezifische Informationen, die auf einem Probengefäß angebracht sind, erfasst und in eine Speichereinheit weiterleitet. Anschließend werden die Probengefäße zu einer Probenentnahmestation transportiert. Mit Hilfe einer Probenpipettiereinrichtung wird dort mindestens ein Aliquot der Probenflüssigkeit aus einem Probengefäß entnommen und in ein Reaktionsgefäß transferiert.

Bei den Reaktionsgefäßen handelt es sich in der Regel um Einwegküvetten, die in einem Küvettenbehälter im Analysegerät vorrätig gehalten werden und die automatisch aus dem Vorratsbehälter in definierte Aufnahmepositionen transferiert werden. Die Reagenzien, die für die Bereitstellung von verschiedenartigen, testspezifischen Reaktionsansätzen erforderlich sind, befinden sich in Reagenzbehältern, die in einer Reagenzstation aufbewahrt werden. Die Reagenzbehälter werden dem Analysegerät entweder automatisch oder manuell zugeführt.

Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien im Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Je nach Art der durchgeführten Untersuchung kann eine Durchmischung der in einem Reaktionsgefäß befindlichen Flüssigkeit erforderlich sein. Auch die Durchmischung von Flüssigreagenzien, die beispielsweise sedimentierende Bestandteile, wie z.B. partikuläre Festphasen, enthalten, kann erforderlich sein. Hierzu kommen üblicherweise Magnetrührer zur Anwendung. Hierbei rotiert ein Magnet unter dem entsprechenden Reaktionsgefäß oder Reagenzbehälter mit regelbarer Geschwindigkeit. In dem Reaktionsgefäß oder Reagenzbehälter befindet sich ein stabförmiges, üblicherweise zylindrisches, oder ein kugelförmiges ferromagnetisches Rührelement, welches durch die magnetische Kraft des rotierenden Magneten ebenfalls in Rotation versetzt wird und so die Flüssigkeit in dem Reaktionsgefäß oder Reagenzbehälter in Bewegung setzt.

Im Stand der Technik werden die Rührelemente entweder manuell vom Anwender in die Reaktionsgefäße eingeführt, oder es werden Reaktionsgefäße bereitgestellt, die bereits ein oder mehrere Rührelemente enthalten.

Aufgrund der Vielzahl von durchzuführenden Testen in einem automatischen Analysegerät ist es wünschenswert, Küvetten automatisiert mit einzelnen Rührelementen zu bestücken.

Dazu können die Rührelemente in einem ersten Schritt in der Art eines Magazins aufgereiht werden, beispielsweise derart, dass sie in einem Schlauch oder Röhrchen entlang ihrer Achse aufgereiht vorliegen. Dies kann entweder extern durchgeführt werden, so dass entsprechende Rührelementmagazine in das automatische Analysegerät eingesetzt werden, oder das Analysegerät kann selbst eine Vorrichtung umfassen, die Rührelemente als Schüttgut aufnimmt und diese in einem Schlauch zur einzelnen Entnahme aufreiht.

In beiden Fällen muss jedoch sichergestellt werden, dass die in dem Schlauch aufgereihten Rührelemente einzeln entnommen und zuverlässig bedarfsgerecht den jeweils gewünschten Küvetten zugeführt werden können.

Es ist daher Aufgabe der Erfindung, eine Vorrichtung bereit zu stellen, die eine schnelle und fehlerresistente Vereinzelung von Rührelementen und eine automatisierte Bestückung von Küvetten mit den Rührstäbchen erlaubt.

Diese Aufgabe wird erfindungsgemäß gelöst, indem die Vorrichtung einen mit einer Bohrung versehenen Hebel umfasst, wobei die Bohrung derart ausgestaltet ist, dass sie ein Rührelement aufnehmen kann. Die Bohrung ist in einer ersten Position des Hebels unter einer Eintrittsöffnung angeordnet und in einer zweiten Position des Hebels über einer Austrittsöffnung angeordnet, wobei der Hebel in der zweiten Position die Eintrittsöffnung verschließt.

Gegenstand der vorliegenden Erfindung ist daher eine Vorrichtung zur Vereinzelung von stab- oder kugelförmigen Objekten umfassend einen mit einer Bohrung versehenen Hebel, wobei die Bohrung derart ausgestaltet ist, dass sie ein stab- oder kugelförmiges Objekt aufnehmen kann. Die Bohrung ist in einer ersten Position des Hebels unter einer Eintrittsöffnung angeordnet und in einer zweiten Position des Hebels über einer Austrittsöffnung angeordnet, wobei der Hebel in der zweiten Position die Eintrittsöffnung verschließt.

Eine erfindungsgemäße Vorrichtung eignet sich beispielsweise besonders zur Vereinzelung von stab- oder kugelförmigen Rührelementen, wie Rührstäbchen oder Rührkugeln oder auch zur Vereinzelung von Reaktionsgefäßen. Die Begriffe "Objekte" und "Elemente" sind synonym zu verstehen.

Es wurde gefunden, dass eine zuverlässige Vereinzelung zunächst durch eine passgenaue Aufnahme für einzelne stab- oder kugelförmigen Objekte in Form einer entsprechenden, an die Objekte angeformten Bohrung möglich ist. Die Bohrung ist dabei an einem Hebel angeordnet, so dass sie bewegt werden kann. In der ersten Position fällt eines der Objekte aus dem Schlauch in die Bohrung. Wird der Hebel durch Anforderung von der Steuereinheit in die zweite Position bewegt, wird der Austritt des Schlauches zunächst verschlossen, so dass kein weiteres Objekt nachfolgt. Die Bohrung wird hingegen über eine Austrittsöffnung gebracht, so dass das einzelne Objekt herausfällt. Unter der Austrittsöffnung ist eine Küvette angeordnet. Bei der Rückbewegung des Hebels gelangt die nun entleerte Bohrung wieder unter den Schlauch und ein neues Objekt fällt in die Bohrung. Dies bietet einen einfachen und zuverlässigen Mechanismus zur Entnahme einzelner Objekte aus dem Schlauch. Der Hebel ist an der Vorrichtung schwimmend gelagert, und die Vorrichtung weist eine erste Zentriervorrichtung zur Zentrierung der Bohrung unter der Eintrittsöffnung in der ersten Position des Hebels auf. Aufgrund der geringen Größe von Objekten wie magnetischen Rührstäbchen oder Rührkugeln in einem automatischen Analysegerät und dem Erfordernis der hohen Passgenauigkeit der Bohrung ist es technisch äußerst schwierig, die Drehachse des Hebels bei einer festen Lagerung so zu justieren, dass stets eine genaue Zentrierung der Bohrung unterhalb der Eintrittsöffnung erfolgt. Die Fertigungstoleranzen bei der Produktion der Bauteile und bei der Montage sind hierbei typischerweise zu groß, um eine derartige Justierung zuverlässig zu gewährleisten. Daher sollte auf eine schwimmende Lagerung, d.h. eine Lagerung mit einem vorgegebenen geringen Spiel zurückgegriffen werden, so dass die Position der Bohrung beim Erreichen der ersten Position durch den Hebel ebenfalls ein gewisses Spiel aufweist. Hier sollte dann eine Zentriervorrichtung vorgesehen sein, die durch eine entsprechende Führung eine Zentrierung der Bohrung unter der Eintrittsöffnung erreicht.

In analoger Weise ist eine derartige Ausgestaltung auch in der zweiten Position vorteilhaft vorgesehen. Dazu weist in zusätzlicher oder alternativer vorteilhafter Ausgestaltung die Vorrichtung eine zweite Zentriervorrichtung zur Zentrierung der Bohrung über der Austrittsöffnung in der zweiten Position des Hebels auf. Auch hier wird somit die Passgenauigkeit der Bohrung über der Austrittsöffnung gewährleistet, so dass die Objekte zuverlässig aus der Bohrung herausfallen.

Eine besonders einfache Ausgestaltung der Zentriervorrichtung ergibt sich, indem diese eine um die Bohrung auf dem Hebel angeordnete kreiszylinderförmige Erhebung und eine um die jeweilige Öffnung angeordnete keilförmige Vertiefung aufweist. Wird die kreisförmige Erhebung bei der Bewegung in die jeweilige Position in den sich verjüngenden Keil geführt, gelangt sie auch bei unterschiedlichen Ausgangspositionen aufgrund der Symmetrie stets in die gleiche Endposition, so dass die Positionierung stets gewährleistet ist. Für eine weitere Optimierung kann die Keilform im Endbereich auch abgerundet sein, so dass sie sich in der Endposition der kreisförmigen Erhebung anformt.

Eine weitere Verbesserung der Passgenauigkeit insbesondere hinsichtlich der Toleranzen bei der Herstellung ist erreichbar, indem die jeweilige Erhebung vorteilhafterweise die Fortsetzung einer die jeweilige Öffnung umschließenden, kreiszylinderförmigen Hülse ist. Mit anderen Worten: die Ein- und/oder Austrittsöffnung befindet sich jeweils in einer hohlzylindrischen Hülse, die mit vergleichsweise kleinen Toleranzen gefertigt werden kann. Die Hülse ist in einer entsprechenden Bohrung an der Vorrichtung angeordnet und ragt über den Rand der Bohrung hinaus, so dass sich die beschriebene Erhebung ergibt.

Der Abstand des Mittelpunkts der Bohrung zu beiden Kanten der Vertiefung entspricht vorteilhafterweise dem Radius der Erhebung. Der Abstand bemisst sich hierbei als kürzeste Strecke von dem Mittelpunkt zu einem Punkt der Kante. Hierdurch ergibt sich die gewünschte genaue Justierung der Bohrung über der Austrittsöffnung bzw. unter der Eintrittsöffnung.

In vorteilhafter Ausgestaltung umfasst die Vorrichtung eine dem Hebel zugeordnete, magnetische Betätigungsvorrichtung. Eine Betätigung des Hebels mittels eines Elektromagneten ist technisch einfach realisierbar und vergleichsweise schnell. Durch die berührungslose Kraftübertragung wird die schwimmende Lagerung ermöglicht, da hier keine Einschränkungen hinsichtlich der Bewegung hingenommen werden müssen.

Die Vorrichtung umfasst weiterhin vorteilhafterweise einen über der Eintrittsöffnung angeordneten Füllstandssensor. Dieser kann beispielsweise in der Art einer Lichtschranke ausgestaltet sein. Hierdurch kann durch die Steuereinrichtung der Vorrichtung ermittelt werden, ob ausreichend Objekte im Vorrat oberhalb der Eintrittsöffnung aufgestapelt sind. Falls keine Objekte vorliegen, kann rechtzeitig ein Austausch durch den Benutzer vorgenommen werden oder eine Nachförderung aus dem Schüttgut erfolgen.

Weiterhin umfasst die Vorrichtung vorteilhafterweise einen unter der Austrittsöffnung angeordneten Sensor für den Durchtritt von Objekten. Auch dieser Sensor kann beispielsweise in der Art einer Lichtschranke ausgestaltet sein. Hierdurch kann durch die Steuereinrichtung der Vorrichtung ermittelt werden, ob tatsächlich ein Objekt bei einer Betätigung des Hebels ausgegeben wird. Falls durch eine Betriebsstörung einmal kein Objekt ausgeworfen wurde, kann der Hebel beispielsweise erneut betätigt werden. Sollte nach mehreren Versuchen kein Objekt ausgegeben werden, deutet dies beispielsweise auf ein in der Bohrung verkeiltes Objekt hin, und es kann ein entsprechender Hinweis an den Benutzer erfolgen.

Ein weiterer Gegenstand der vorliegenden Erfindung ist ein automatisches Analysegerät, das eine beschriebene Vorrichtung zur Vereinzelung von Rührelementen, bevorzugt von magnetisch anziehbaren Rührstäbchen oder Rührkugeln umfasst.

Die mit der Erfindung erzielten Vorteile bestehen insbesondere darin, dass durch die durch einen einfachen Hebel mit einer Bohrung erfolgende Vereinzelung von Rührelementen aus einem aufgestapelten Vorrat eine besonders einfache und zuverlässige Bestückung von Küvetten mit Rührelementen in einem automatischen Analysegerät erfolgen kann. Die Vorrichtung ist weitgehend verschleißfrei und funktionssicher.

In einer weiteren vorteilhaften Ausgestaltung ist eine erfindungsgemäße Vorrichtung zur Vereinzelung von stab- oder kugelförmigen Objekten mit einer Vorrichtung verbunden, die magnetische Rührelemente als Schüttgut aufnimmt und diese in einem Schlauch zur einzelnen Entnahme aufreiht.

Ein weiterer Gegenstand der vorliegenden Erfindung ist daher eine Vorrichtung zur Vereinzelung von magnetisch anziehbaren, stab- oder kugelförmigen Elementen umfassend eine entlang einer vorgegebenen Bewegungsbahn bewegbare ebene Oberfläche mit mindestens einem rückseitig angebrachten Permanentmagneten, sowie folgende entlang der Bewegungsbahn angeordnete, die Oberfläche berührende Teile:
- einen Vorrat zum Aufnehmen einer Menge von magnetisch anziehbaren Elementen;
- eine erste Schikane mit einer dem Querschnitt des jeweiligen magnetisch anziehbaren Elements entsprechenden Aussparung zum Abstreifen überzähliger magnetisch anziehbarer Elemente;
- eine Rinne mit einem Eintritt und mit einem dem Querschnitt des jeweiligen magnetisch anziehbaren Elements entsprechenden Querschnitt zur Aufnahme eines magnetisch anziehbaren Elements;
- einen an die Rinne angeschlossenen Schlauch, dessen Innenquerschnitt dem Querschnitt des jeweiligen magnetisch anziehbaren Elements entspricht;
wobei am Ende des Schlauches eine erfindungsgemäße Vorrichtung zur Vereinzelung von stab- oder kugelförmigen Objekten befestigt ist.

Die Ausrichtung des Schlauchs weist vorteilhafterweise eine Richtungskomponente in Richtung der Gravitation auf. Dadurch wird gewährleistet, dass die in Schlauch und Rinne eingeführten magnetisch anziehbaren Elemente selbsttätig im Schlauch nach unten fallen und dort mittels einer erfindungsgemäßen Vorrichtung zur Vereinzelung von stab- oder kugelförmigen Objekten einzeln abgegeben werden können. Ein aktiver Weitertransport ist nicht erforderlich.

Vorzugsweise liegt der Eintritt der Rinne in der Bewegungsbahn der ebenen Oberfläche, und die Längsrichtung der Rinne weicht in einem sich dem Eintritt anschließenden Bereich in der Ebene der Oberfläche von der Bewegungsbahn ab.

Es wurde erkannt, dass die magnetischen Eigenschaften der Rührelemente für die Vereinzelung genutzt werden können. Dazu wird zunächst eine Oberfläche mit einem rückseitig angebrachten Permanentmagneten durch entsprechende mechanische Führung an einem Vorrat, der eine Vielzahl von magnetisch anziehbaren Elementen enthält, vorbeigeführt, so dass eine Vielzahl von gleichartigen Rührelementen magnetisch an der Oberfläche haften bleibt. Bedingt durch die Verstärkung des magnetischen Feldes zur Quelle hin wird typischerweise ein Rührelement, das typischerweise die Form einer Kugel oder eines Stäbchens hat, eine Stellung über dem Permanentmagneten einnehmen und sich zudem gemäß der Nord-Süd-Polausrichtung des Magneten ausrichten. Darüber werden typischerweise weitere Rührelemente aus dem Vorrat in chaotischer oder nur teilweise geordneter Anordnungauf der Oberfläche haften bleiben. Diese werden durch Bewegen der Oberfläche über eine Schikane mit einer dem Querschnitt des jeweiligen Rührelementetyps entsprechenden Aussparung abgestreift, so dass nur noch ein einziges Rührelement oder gegebenenfalls zwei längs hintereinander angeordnete Rührelemente auf der Oberfläche übrig bleiben. Diese werden in eine Rinne mit einem dem Querschnitt des jeweiligen Rührelementetyps entsprechenden Querschnitt eingeführt, indem die Oberfläche über die Rinne gebracht wird. Wird dann die Oberfläche seitlich über den Rand der Rinne bewegt, was entweder durch Veränderung der Bewegungsrichtung der Oberfläche oder Krümmung der Rinne bewirkt werden kann, wird das oder die Rührelemente auf der Oberfläche seitlich bewegt, bis sie aus dem Einflussbereich des Permanentmagneten gelangen. Das oder die Rührelemente liegen dann aufgereiht in der Rinne.

In besonders einfacher Ausgestaltung erfolgt die Bewegung der Oberfläche entlang einer Kreisbahn, und die Pole des Permanentmagneten werden tangential ausgerichtet. Hierdurch kann die Oberfläche durch einfache Rotation durch einen Elektromotor bewegt werden, was die Durchführung des Verfahrens vereinfacht. Durch eine tangentiale Ausrichtung des Magneten werden die Rührelemente automatisch in Bewegungsrichtung ausgerichtet.

In weiterer vorteilhafter Ausgestaltung werden die Verfahrensschritte zyklisch wiederholt und die in der Rinne befindlichen Rührelemente in den Schlauch geführt, dessen Innenquerschnitt dem Querschnitt des jeweiligen Rührelementetyps entspricht. Insbesondere bei der Ausgestaltung der Bewegung entlang einer Kreisbahn ist eine zyklische Wiederholung besonders einfach durchführbar. Hierbei werden in regelmäßigen Abständen neue Rührelemente aus dem Vorrat entnommen. Werden diese in den Schlauch mit dem passenden Durchmesser geführt, liegen sie dort aufgereiht vor und können am Ende des Schlauchs mittels einer erfindungsgemäßen Vorrichtung zur Vereinzelung von stab- oder kugelförmigen Objekten einzeln abgegeben werden.

Eine Vielzahl von magnetisch anziehbaren Rührelementen, die dieselbe Form und Größe aufweisen, die also derselben Beschaffenheit sind, gehören zu einem Rührelementetyp.

In vorteilhafter Ausgestaltung ist die Bewegungsbahn eine Kreisbahn, die ebene Oberfläche und die Kreisbahn liegen in einer Ebene, und die Pole des Permanentmagneten sind tangential ausgerichtet.

Vorteilhafterweise ist die ebene Oberfläche Teil einer Kreisplatte. Dies bietet den Vorteil, dass sich ein geschlossenes System bilden lässt: Vorrat, erste Schikane und Rinne werden in kreisförmiger Anordnung in einer runden Wanne angeordnet, die Kreisplatte wird mit den Magneten an der Außenseite als Deckel darauf drehbar angebracht. Lediglich eine Einführöffnung für die magnetisch anziehbaren Elemente und ein Austritt für die in der Rinne abgelegten magnetisch anziehbaren Elemente müssen vorgesehen sein. Die Vereinzelung erfolgt vollständig innerhalb des geschlossenen Raumes.

In weiterer vorteilhafter Ausgestaltung weist die Kreisplatte rückseitig eine Mehrzahl von Permanentmagneten auf einer Kreisbahn auf. Hierdurch lässt sich der Vereinzelungsprozess ohne Erhöhung der Drehzahl der Kreisplatte beschleunigen, da pro Umdrehung der Kreisplatte mehrere magnetisch anziehbare Elemente in die Rinne eingebracht werden können.

Vorteilhafterweise umfasst die Vorrichtung eine zweite entlang der Bewegungsbahn angeordnete, die Oberfläche berührende Schikane mit einer größeren Aussparung als die der ersten Schikane. Eine derartige zweite Schikane mit größerer Durchtrittsöffnung ist in der Bewegungsrichtung vor der ersten Schikane angeordnet und wirkt in der Art eines Grobfilters, der vor dem Abstreifen aller bis auf ein einziges magnetisch anziehbares Element zunächst die meisten überzähligen Elemente entfernt. Wird nämlich eine zu große Anzahl von Elementen von der Platte mitgeführt, kann es zu Verkantungen kommen, oder die dem Magneten am nächsten liegenden Elemente sind chaotisch angeordnet, so dass möglicherweise alle Elemente abgestreift werden. Dies wird durch eine vorgeschaltete gröbere Aussparung verhindert.

Die Erfindung wird anhand einer Zeichnung näher erläutert. Darin zeigen:
- FIG 1: eine erfindungsgemäße Vorrichtung (1) mit einem Hebel zur einzelnen Entnahme von Rührelementen aus einem Schlauch in demontiertem Zustand,
- FIG 2: den Hebel in montiertem Zustand, und
- FIG 3: den demontierten Hebel aus FIG 2 in anderer Ansicht.
- FIG 4: eine Kreisplatte mit rückseitig angebrachten Magneten,
- FIG 5: eine mit der Kreisplatte verschließbare Wanne mit einem Vorrat für Rührelemente, mit Schikanen und mit einer Rinne, und
- FIG 6: die verbundene Vorrichtung (100) mit Kreisplatte, Wanne und angeschlossenem Schlauch.

Gleiche Teile sind in allen Figuren mit denselben Bezugszeichen versehen.

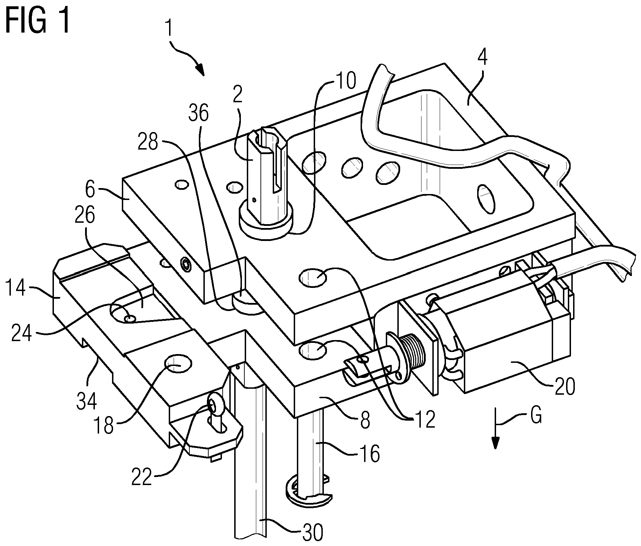

Die FIG 1 bis 3 erläutern die einzelnen Teile einer Vorrichtung 1 zur Vereinzelung von Rührelementen in einem nicht näher dargestellten Analysegerät. Die Rührelemente, die mit der Vorrichtung 1 vereinzelt und in Reaktionsgefäße abgegeben werden sollen, sind zylindrisch und haben eine Länge von 4 mm und einen Durchmesser von 1 mm. Sie sind aus einem ferromagnetischen Material gefertigt und werden als Schüttgut dem automatischen Analysegerät zugeführt. Hier werden sie durch eine nicht näher dargestellte Vorrichtung in einen ebenfalls nicht dargestellten Schlauch geführt, dessen Innendurchmesser dem Durchmesser der Rührelemente entspricht, so dass die Rührelemente entlang des Schlauches nach unten gleiten und im Schlauch aufgereiht sind. Die Rührelemente werden im Folgenden auch als Rührstäbchen bezeichnet.

Der Schlauch ist flexibel und kann je nach Einbausituation entsprechend verlängert oder gekürzt werden. Am Austritt des Schlauches ist eine Befestigungsvorrichtung angeordnet, die mit der in FIG 1 gezeigten Hülse 2 verbunden wird. Die Hülse 2 ist im wesentlichen hohlzylinderförmig ausgestaltet und weist eine Befestigungsmöglichkeit für den Schlauch auf. Der Innendurchmesser im unteren Teil der Hülse 2 entspricht dem des Schlauches. Die Rührstäbchen treten somit aus dem Schlauch aus und stapeln sich in der Hülse 2, die daher auch als Einführhülse bezeichnet wird.

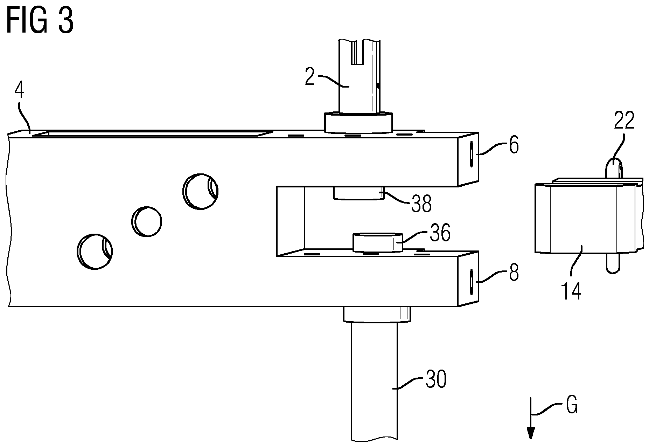

Der in FIG 1 gezeigte Teil umfasst zunächst einen zentralen Befestigungsrahmen 4, von dem aus sich zwei planparallele, horizontal ausgerichtete Platten 6, 8 erstrecken. Befestigungsrahmen 4 und Platten 6, 8 sind einteilig ausgeführt. Die obere Platte 6 umfasst eine Bohrung 10, in der die Hülse 2 angeordnet ist. Die Hülse 2 tritt dabei auf der anderen Seite der oberen Platte 6 aus, so dass sich hier eine Erhebung 38 bildet, die in FIG 3 gezeigt und im Folgenden noch näher beschrieben ist.

Gegenüber der Hülse 2 horizontal versetzt sind in den Platten 6, 8 konzentrische Bohrungen 12 zur Lagerung eines Hebels 14 mittels eines Bolzens 16 vorgesehen. Der Hebel 14 ist dabei schwimmend gelagert, indem er ein Langloch 18 aufweist, durch das der Bolzen 16 durchtritt. Das Langloch 18 erlaubt ein Spiel in der Lagerung. Ein am Befestigungsrahmen 4 angeordneter Magnetschalter 20 ist über einen Splint 22 mit dem Hebel 14 derart verbunden, dass er den Hebel 14 betätigen kann.

Der Hebel 14 wird dabei von dem Magnetschalter 20 zwischen einer ersten und einer zweiten Position bewegt. Die Bewegung wird von einer Steuereinrichtung des automatischen Analysegeräts gesteuert. Der Hebel 14 weist eine Bohrung 24 auf, die in der ersten Position unterhalb der Einführhülse 2 liegt. Die Bohrung 24 entspricht in ihrem Durchmesser dem eines Rührstäbchens. Die Höhe der Bohrung 24 entspricht in etwa einer Länge eines Rührstäbchens. Auf der Oberseite des Hebels 14 ist eine Vertiefung 26 um die Bohrung 24 herum angeordnet.

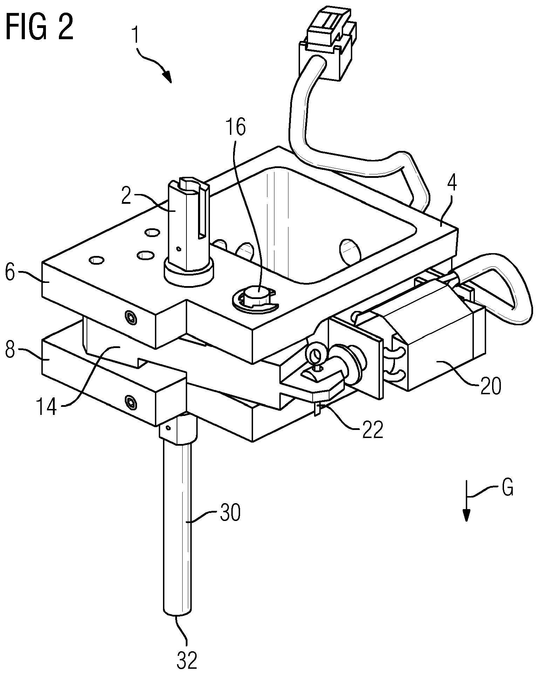

Die untere Platte 8 weist ebenfalls eine Bohrung 28 auf, in die eine nach unten erstreckte hohlzylindrische Hülse 30 mit einer in FIG 2 gezeigten Austrittsöffnung 32 angeschlossen ist. Die Bohrung 28 ist gegenüber der Bohrung 10 der Hülse 2 in der oberen Platte 6 versetzt angeordnet. Analog zur Hülse 2 erstreckt sich jedoch die Hülse 30 ebenfalls in den Zwischenraum zwischen den Platten 6, 8, so dass sich hier eine eine kreiszylindrische Erhebung 36 bildet. Die Bohrung 24 im Hebel 14 ist in der zweiten Position des Hebels 14 über der Hülse 30 angeordnet.

Auf der Unterseite des Hebels 14 ist eine analog zur Vertiefung 26 ausgebildete Vertiefung 34 um die Bohrung 24 herum angeordnet. Sie ist ebenso keilförmig mit abgerundeter Spitze ausgeführt, jedoch weist die Öffnungsrichtung des Keils hierbei in die entgegengesetzte Bewegungsrichtung des Hebels 14.

Die jeweiligen Vertiefungen 26, 34 sind bezüglich der durch die Hülsen 2, 30 gebildeten Erhebungen 38, 36 folgendermaßen ausgestaltet: Die abgerundeten Spitzen der Keile weisen denselben Radius wie die Erhebungen 38, 36 auf. Daran anschließend vergrößern die Kanten des jeweiligen Keils ihren Abstand. Wird der Hebel 14 also horizontal in die jeweilige Vertiefung 26, 34 bewegt, wird die Erhebung 38, 36 automatisch in der abgerundeten Spitze des Keils zentriert.

Die in FIG 1 gezeigte Vorrichtung 1 ist in FIG 2 im zusammengebauten Zustand gezeigt. FIG 3 zeigt noch einmal die Explosionszeichnung aus FIG 1 in horizontaler Ansicht. Hier ist der Versatz der Hülsen 2, 30 und die ihnen zugehörigen Erhebungen 36, 38 erkennbar. In der Erhebung 36 der Hülse 30 ist die Austrittsöffnung für die Rührstäbchen zentriert, in der Erhebung 38 der Hülse 2 die Eintrittsöffnung, über der die Rührstäbchen gestapelt sind und die nach und nach in die Bohrung 24 fallen.

Noch einmal soll die dadurch erreichte Zentrierung erläutert werden: In Form der Erhebungen 36, 38 erstrecken sich die Hülsen 2, 30 in den Bereich zwischen den Platten 6, 8 hinein. Die kreiszylindrischen Erhebungen 36, 38 greifen in die Vertiefungen 26 bzw. 34 ein. Die Vertiefungen 26, 34 sind dabei entgegengesetzt keilförmig. Durch das Langloch 18 ist der Hebel 14 schwimmend gelagert, d.h. hinsichtlich seiner Achse nur in gewissen vorgegebenen Grenzen mit Spiel fixiert. Durch die Keilform der Vertiefungen 26, 34 erfolgt nun in jeder Endposition des Hebels 14 durch das Eingreifen in die Erhebungen 36, 38 eine automatische, hochgenaue Zentrierung, so dass die Rührstäbchen ohne zu verkeilen hindurch fallen können.

Anhand der FIG 1 bis 3 wird die Funktionsweise der Vorrichtung 1 erläutert: Im Ruhezustand befindet sich der Hebel 14 in der ersten Position. Die in den Schlauch geführten Rührstäbchen fallen nach unten. Eines der Rührstäbchen fällt aus der Hülse 2 in die Bohrung 24. Es steht dabei auf der Erhebung 36 der Hülse 30 auf. Die übrigen Rührstäbchen im Schlauch bzw. innerhalb der Hülse 2 stapeln sich über dem in der Bohrung 24 befindlichen Rührstäbchen.

Soll nun ein Rührstäbchen aus der Austrittsöffnung 32 in eine Küvette gegeben werden, wird von der Steuereinheit der Magnetschalter 20 aktiviert. Dieser bewegt den Hebel 14 in die zweite Position. Die Bohrung 24 befindet sich nun über der Hülse 30, und das Rührstäbchen fällt nach unten. Der Hebel 14 verschließt in dieser Position die Eintrittsöffnung der Einführhülse 2, so dass keine Rührstäbchen nachfallen. Erst nach der Rückbewegung in die erste Position, wenn die Bohrung 24 unterhalb der Hülse 2 liegt, kann ein weiteres Rührstäbchen in die Bohrung 24 nachrücken.

Im Bereich der Hülse 2 und der Hülse 30 sind in der Art einer Lichtschranke ausgestaltete, nicht näher dargestellte Sensoren angeordnet. Der Sensor in der Hülse 2 überwacht den Füllstand der Hülse 2, d.h. ob noch genügend Vorrat an Rührstäbchen vorliegt. Wird der Hebel 14 betätigt, wird mittels des Sensors in der Hülse 30 von der Steuereinheit überprüft, ob ein Rührstäbchen abgegeben wurde. Ist dies nicht der Fall, wird der Hebel erneut betätigt. Wird bei mehreren Versuchen kein Rührstäbchen abgegeben, liegt eine Fehlfunktion vor, und es wird ein Benutzeralarm ausgelöst.

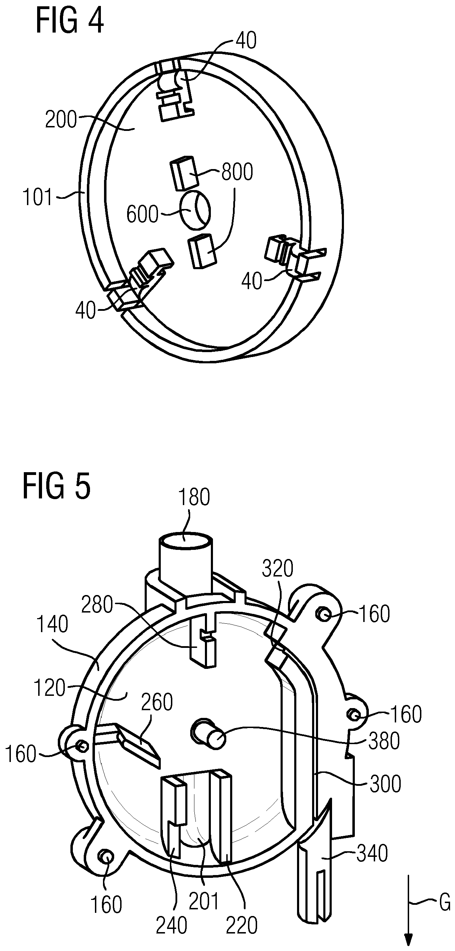

Die FIG 4 bis 6 erläutern die einzelnen Teile einer Vorrichtung 100 zur Vereinzelung von Rührelementen in einem nicht näher dargestellten Analysegerät. Die Rührelemente, die mit der Vorrichtung 100 vereinzelt und in Reaktionsgefäße abgegeben werden sollen, sind zylindrisch und haben eine Länge von 4 mm und einen Durchmesser von 1 mm. Sie sind aus einem ferromagnetischen Material gefertigt und werden als Schüttgut dem automatischen Analysegerät zugeführt. Die Rührelemente werden im Folgenden auch als Rührstäbchen bezeichnet.

FIG 4 zeigt eine Kreisplatte 200, die dazu dient, Rührstäbchen mittels Permanentmagneten 40 aufzunehmen und zu vereinzeln. FIG 4 zeigt eine rückseitige Ansicht der Kreisplatte 200, die auf der in FIG 4 nicht dargestellten Seite bis auf eine im Mittelpunkt angeordnete Bohrung 600 für eine Antriebswelle vollkommen eben ausgestaltet ist. Auf der gezeigten Rückseite sind im Bereich der Bohrung 600 Mitnehmer 800 zur Befestigung einer Antriebswelle angeordnet. Die drei Permanentmagnete 40 sind auf der Rückseite auf einer Kreisbahn um die Bohrung 600 angeordnet. Sie bilden dabei ein gleichseitiges Dreieck und sind mit ihrer Nord-Süd-Polachse tangential auf der Kreisbahn angeordnet. Die Kreisplatte 200 weist weiterhin einen erhabenen umlaufenden Rand 101 auf, der lediglich von Haltevorrichtungen für die Permanentmagnete 40 unterbrochen wird.

FIG 5 zeigt eine tellerförmige Wanne 120 mit kreisrund umlaufendem erhabenem Rand 140. Auf der Außenseite sind verschiedene Fixierstifte 160 zur passgenauen Fixierung der Vorrichtung 100 im automatischen Analysegerät angeordnet. FIG 5 zeigt die tellerförmige Wanne 120 in der für die Vorrichtung 100 bevorzugten Ausrichtung bezüglich der Gravitationskraft G. Die Wanne 120 wird von der in FIG 4 gezeigten Kreisplatte 200 derart verschlossen, dass die ebene Seite der Kreisplatte 200 zum Innenraum der Wanne 120 weist und einen geschlossenen Hohlraum bildet. Dementsprechend hat der Rand 140 denselben Durchmesser wie die Kreisplatte 200 und ist flach. Sämtliche im Folgenden erläuterten Einbauten in der Wanne 120 erstrecken sich ebenfalls bis zur Höhe des Randes 140, so dass sie die Kreisplatte 200 berühren, sofern dies nicht gesondert abweichend beschrieben ist.

Die Wanne 120 weist an ihrer oberen Seite eine Einfüllöffnung 180 für Rührstäbchen auf. In einem Kanal auf der Rückseite der Wanne 120 fallen die Rührstäbchen nach unten. Im Bereich des unten angeordneten Randes 140 ist der Kanal nach vorne gebogen und mit dem Innenraum der Wanne 120 verbunden. Hier bildet sich ein Vorrat 201 zur Aufnahme einer Vielzahl von Rührstäbchen, der von senkrechten Wandungen mit Rückhalterippen 220, 240 begrenzt wird. Der rückseitige Kanal bildet somit in der Art eines Steigrohres eine Einfüllvorrichtung für die Rührstäbchen, die ein vollständiges Auffüllen der Wanne 120 verhindert, sondern innerhalb der Wanne 120 lediglich eine Menge an Rührstäbchen vorhält und gleichzeitig Platz innerhalb der Wanne 120 für das im folgenden beschriebene Vereinzelungsverfahren lässt.

Die rechte Rückhalterippe 220 berührt nicht die Kreisplatte 200, so dass eine Durchlässigkeit für einzelne Rührstäbchen besteht. Die linke Rückhalterippe 240 erstreckt sich bis zur Kreisplatte 200, hat an ihrem unteren Ende jedoch eine Aussparung, die eine Durchlässigkeit für Rührstäbchen gewährleistet. Die Aussparung umfasst den Radius der Kreisbahn, auf der die Permanentmagnete 40 angeordnet sind.

Auf der linken Seite der Wanne 120 ist eine schräg nach unten orientierte Wandung mit einer in der Art einer Kante ausgebildeten Schikane 260 angeordnet. Diese weist eine Aussparung auf, die den Radius der Kreisbahn, auf der die Permanentmagnete 40 angeordnet sind, umfasst und sich nicht bis zur Kreisplatte 200 erstreckt. Die Aussparung ist kleiner als die Aussparung der linken Rückhalterippe 240 bemessen, jedoch immer noch so groß, dass mehrere Rührstäbchen gleichzeitig passieren können.

Am oberen Ende der Wanne 120 ist eine senkrecht angeordnete weitere Wandung mit einer in der Art einer Kante ausgestalteten Schikane 280 vorgesehen, die eine Aussparung aufweist, die exakt auf der Kreisbahn liegt, auf der die Permanentmagnete 40 angeordnet sind und die im Durchmesser nur geringfügig größer ist, als der Durchmesser eines Rührstäbchens. Die Aussparung lässt nur ein einzelnes oder zwei längs hintereinander angeordnete Rührstäbchen passieren.

Auf der rechten Seite der Wanne 120 ist eine Rinne 300 angeordnet, die von Wandungen begrenzt wird. Die dem Rand 140 zugewandte Wandung erstreckt sich weiter nach oben als die dem Rand 140 abgewandte Wandung. Die Rinne 300 ist in Durchmesser und Tiefe dem Durchmesser der Rührstäbchen angepasst. Ihr Eintritt 320 liegt auf der Kreisbahn der Permanentmagnete 40. Die Rinne 300 folgt zunächst dieser Kreisbahn, bis sie schließlich senkrecht nach unten führt.

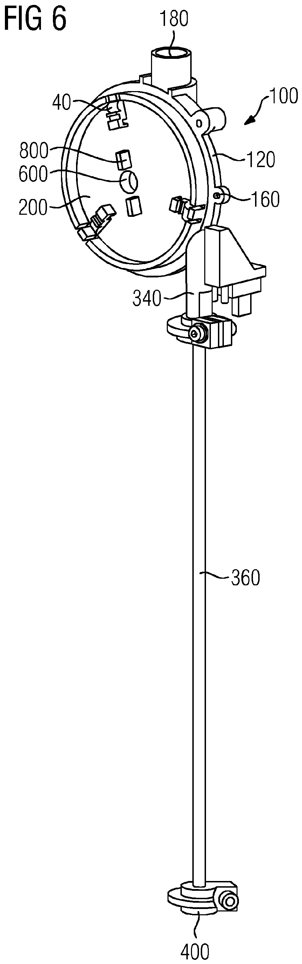

An die Rinne 300 schließt sich ein Anschluss 340 für den erst in FIG 6 gezeigten Schlauch 360 an. Die beschriebenen Wandungen erstrecken sich nicht bis zum Mittelpunkt der Wanne 120, so dass hier ein Freiraum verbleibt, in dem lediglich ein im Wesentlichen zylindrischer Lagerzapfen 380 mit einer Bohrung für eine Antriebswelle verbleibt.

FIG 6 zeigt die an der Wanne 120 befestigte Kreisplatte 200 mit den bereits beschriebenen Teilen und dem Schlauch 360.

Die Funktionsweise der Vorrichtung 100 wird nun anhand der FIG 4 bis 6 erläutert: Aus Sicht der FIG 5 wird die Kreisplatte 200 über eine nicht näher dargestellte Antriebswelle mit Elektromotor im Uhrzeigersinn gedreht. Wenn ein Permanentmagnet 40 den Vorrat 201 passiert, bleibt eine Vielzahl von Rührstäbchen aufgrund der magnetischen Kraft an der ebenen Oberfläche der Kreisplatte 200 haften. Die Rührstäbchen werden im Uhrzeigersinn mitgenommen. Überzählige Rührstäbchen werden an der Rückhalterippe 240 und der Schikane 260 nach und nach abgestreift und fallen nach unten. Spätestens nach der Schikane 260 sollte aufgrund der mit der Entfernung abnehmenden Kraftwirkung des magnetischen Feldes eines der Rührstäbchen eine bevorzugte Position direkt über dem jeweiligen Permanentmagneten 40 eingenommen haben. Es können auch zwei längs hintereinander angeordnete Rührstäbchen diese Position einnehmen.

An der Schikane 280 werden schließlich sämtliche bis auf das eine oder die zwei Rührstäbchen in der bevorzugten Position abgestreift und fallen zurück in den Vorrat 201. Das oder die verbleibenden Rührstäbchen werden in die Rinne 300 eingeführt. Sobald die Rührstäbchen den senkrechten Abschnitt der Rinne 300 erreichen, bewegt sich der Permanentmagnet 40 auf der Kreisbahn von der Rinne 300 weg. Die Rührstäbchen in der Rinne 300 können dem Permanentmagneten 40 aufgrund des Formschlusses nicht folgen und werden so aus dem Wirkungsbereich des Permanentmagneten 40 entfernt. Sie fallen anschließend in den Schlauch 360.

Die Umdrehung der Kreisplatte 200 verläuft kontinuierlich. Pro Umdrehung wird das beschriebene Verfahren durch die Verwendung von drei Permanentmagneten 40 dreimal durchgeführt. Am Anschluss 340 ist ein nicht näher dargestellter Sensor angeordnet, der den Durchtritt von Rührstäbchen erfasst. Die nicht näher gezeigte Steuereinheit ist so ausgelegt, dass bei einer Nichterfassung von Rührstäbchen während drei Umdrehungen der Antriebsmotor angehalten und in umgekehrter Richtung für eine Umdrehung bewegt wird. Danach wird wieder in den Normalbetrieb übergegangen. So können eventuelle Verkeilungen der Rührstäbchen im Inneren der Wanne 120 beseitigt werden.

Der Schlauch 360 ist flexibel und kann je nach Einbausituation entsprechend verlängert oder gekürzt und angeordnet werden. Am Anschluss 340 und dem Austritt 400 des Schlauches sind als Lichtschranken ausgebildete, nicht näher dargestellte Sensoren angeordnet. Die Sensoren dienen zur Detektion des Füllstandes des Schlauches 360 und ermöglichen der Steuereinheit die Prüfung der korrekten Funktion der Einheit mit Kreisplatte 200 und Wanne 120. Wird z.B. nach einer vorgegebenen Anzahl von Umdrehungen der Kreisplatte 200 kein Durchtritt von Rührstäbchen am Anschluss 340 erkannt, deutet dies auf eine Fehlfunktion, z.B. eine Verkeilung von Rührstäbchen in der Wanne 120 hin. Hier kann beispielsweise durch ein automatisiert veranlasstes Drehen der Kreisplatte 200 in umgekehrter Richtung die Verkeilung gelöst werden. Sollte die Fehlfunktion nicht beseitigt werden können, wird ein Benutzeralarm ausgelöst.

Die Befestigung der erfindungsgemäßen Vorrichtung 1 ist an dem Austritt 400 vorgesehen.

### BEZUGSZEICHENLISTE

- 1, 100: Vorrichtung
- 2: Hülse
- 4: Befestigungsrahmen
- 6, 8: Platte
- 10, 12, 24, 28, 600: Bohrung
- 14: Hebel
- 16: Bolzen
- 18: Langloch
- 20: Magnetschalter
- 22: Splint
- 26: Vertiefung
- 30: Hülse
- 32: Austrittsöffnung
- 34: Vertiefung
- 36, 38: Erhebung
- 100: Vorrichtung
- 200: Kreisplatte
- 40: Permanentmagnet
- 800: Mitnehmer
- 101: Rand
- 120: Wanne
- 140: Rand
- 160: Fixierstift
- 180: Einfüllöffnung
- 201: Vorrat
- 220, 240: Rückhalterippe
- 260, 280: Schikane
- 300: Rinne
- 320: Eintritt
- 340: Anschluss
- 360: Schlauch
- 380: Lagerzapfen
- 400: Austritt

- G: Gravitation

## Patentansprüche

1. Vorrichtung (1) zur Vereinzelung von stab- oder kugelförmigen Objekten, umfassend einen mit einer Bohrung (24) versehenen Hebel (14), wobei die Bohrung (24) derart ausgestaltet ist, dass sie ein stab- oder kugelförmiges Objekt aufnehmen kann, und wobei die Bohrung (24) in einer ersten Position des Hebels (14) unter einer Eintrittsöffnung angeordnet ist und in einer zweiten Position des Hebels (14) über einer Austrittsöffnung (32) angeordnet ist, wobei der Hebel (14) in der zweiten Position die Eintrittsöffnung verschließt, **dadurch gekennzeichnet, dass** der Hebel (14) an der Vorrichtung (1) schwimmend gelagert ist und die Vorrichtung (1) eine erste Zentriervorrichtung aufweisend einen Zentrieranschlag zur Zentrierung der Bohrung (24) unter der Eintrittsöffnung in der ersten Position des Hebels (14) aufweist.

2. Vorrichtung (1) nach Anspruch 1, bei der der Hebel (14) an der Vorrichtung (1) schwimmend gelagert ist und die Vorrichtung (1) eine zweite Zentriervorrichtung aufweisend einen Zentrieranschlag zur Zentrierung der Bohrung (24) über der Austrittsöffnung (32) in der zweiten Position des Hebels (14) aufweist.

3. Vorrichtung (1) nach Anspruch 1 oder 2, bei der die jeweilige Zentriervorrichtung eine um die Bohrung (24) auf dem Hebel (14) angeordnete, kreiszylinderförmige Erhebung (36, 38) und eine um die jeweilige Öffnung angeordnete keilförmige Vertiefung (26, 34) aufweist.

4. Vorrichtung (1) nach Anspruch 3, bei der die jeweilige Erhebung (36, 38) die Fortsetzung einer die jeweilige Öffnung umschließenden, kreiszylinderförmigen Hülse (2, 30) ist.

5. Vorrichtung (1) nach Anspruch 3 oder 4, bei der der Abstand des Mittelpunkts der Bohrung (24) zu beiden Kanten der Vertiefung (26, 34) dem Radius der Erhebung (36, 38) entspricht.

6. Vorrichtung (1) nach einem der vorhergehenden Ansprüche, umfassend eine dem Hebel (14) zugeordnete, magnetische Betätigungsvorrichtung (20).

7. Vorrichtung (1) nach einem der vorhergehenden Ansprüche, umfassend einen über der Eintrittsöffnung angeordneten Füllstandssensor.

8. Vorrichtung (1) nach einem der vorhergehenden Ansprüche umfassend einen unter der Austrittsöffnung (32) angeordneten Sensor für den Durchtritt von stab- oder kugelförmigen Objekten.

9. Vorrichtung (1) nach einem der vorhergehenden Ansprüche zur Vereinzelung von magnetisch anziehbaren stab- oder kugelförmigen Rührelementen.

10. Verwendung einer Vorrichtung (1) nach einem der vorhergehenden Ansprüche zur Vereinzelung von magnetisch anziehbaren, stab- oder kugelförmigen Rührelementen in einem automatischen Analysegerät.

11. Vorrichtung (100) zur Vereinzelung von magnetisch anziehbaren, stab- oder kugelförmigen Elementen umfassend eine entlang einer vorgegebenen Bewegungsbahn bewegbare ebene Oberfläche mit mindestens einem rückseitig angebrachten Permanentmagneten (40), sowie folgende entlang der Bewegungsbahn angeordnete, die Oberfläche berührende Teile:
- einen Vorrat (200) zum Aufnehmen einer Menge von magnetisch anziehbaren Elementen;
- eine erste Schikane (280) mit einer dem Querschnitt des jeweiligen magnetisch anziehbaren Elements entsprechenden Aussparung zum Abstreifen überzähliger magnetisch anziehbarer Elemente;
- eine Rinne (300) mit einem Eintritt (320) und mit einem dem Querschnitt des jeweiligen magnetisch anziehbaren Elements entsprechenden Querschnitt zur Aufnahme eines magnetisch anziehbaren Elements;
- einen an die Rinne (300) angeschlossenen Schlauch (360), dessen Innenquerschnitt dem Querschnitt des jeweiligen magnetisch anziehbaren Elements entspricht;
**dadurch gekennzeichnet, dass**
am Ende des Schlauches (360) eine Vorrichtung (1) gemäß einem der Ansprüche 1-9 befestigt ist.

12. Vorrichtung (100) gemäß Anspruch 11, bei der die Ausrichtung des Schlauchs (360) eine Richtungskomponente in Richtung der Gravitation (G) aufweist.

13. Vorrichtung (100) gemäß einem der Ansprüche 11 und 12, bei der die Bewegungsbahn eine Kreisbahn ist, die ebene Oberfläche und die Kreisbahn in einer Ebene liegen, und die Pole des Permanentmagneten (40) tangential ausgerichtet sind.

14. Vorrichtung (100) gemäß einem der Ansprüche 11 bis 13, bei der die ebene Oberfläche Teil einer Kreisplatte (200) ist.

15. Vorrichtung (100) gemäß Anspruch 14, bei der die Kreisplatte (200) rückseitig eine Mehrzahl von Permanentmagneten (40) auf einer Kreisbahn aufweist.

16. Vorrichtung (100) gemäß einem der Ansprüche 11 bis 15, umfassend eine zweite die Oberfläche berührende Schikane (260), welche entlang der Bewegungsbahn zwischen dem Vorrat (201) und der ersten Schikane (280) angeordnet ist und welche eine größere Aussparung als die erste Schikane (280) aufweist.

17. Verwendung einer Vorrichtung (100) gemäß einem der Ansprüche 11 bis 16 zur Vereinzelung von magnetisch anziehbaren, kugel- oder stäbchenförmigen Rührelementen in einem automatischen Analysegerät.

18. Automatisches Analysegerät mit einer Vorrichtung (100) nach einem der Ansprüche 11 bis 16.

## Claims

1. Apparatus (1) for separating rod-like or spherical objects, comprising a lever (14) provided with a bore (24), wherein the bore (24) is configured such that it can accommodate a rod-like or spherical object, and wherein the bore (24), in a first position of the lever (14), is arranged beneath an entry opening and, in a second position of the lever (14), is arranged above an exit opening (32), wherein the lever (14), in the second position, closes the entry opening, **characterized in that** the lever (14) is mounted in a floating manner on the apparatus (1) and the apparatus (1) has a first centering means which has a centering stop and is intended for centering the bore (24) beneath the entry opening in the first position of the lever (14).

2. Apparatus (1) according to Claim 1, in the case of which the lever (14) is mounted in a floating manner on the apparatus (1) and the apparatus (1) has a second centering means which has a centering stop and is intended for centering the bore (24) above the exit opening (32) in the second position of the lever (14).

3. Apparatus (1) according to Claim 1 or 2, in the case of which the respective centering means has a circular-cylindrical elevation (36, 38), which is arranged around the bore (24) on the lever (14), and a wedge-shaped depression (26, 34), which is arranged around the respective opening.

4. Apparatus (1) according to Claim 3, in the case of which the respective elevation (36, 38) is the continuation of a circular-cylindrical sleeve (2, 30), which encloses the respective opening.

5. Apparatus (1) according to Claim 3 or 4, in the case of which the distance between the center point of the bore (24) and the two edges of the depression (26, 34) corresponds to the radius of the elevation (36, 38).

6. Apparatus (1) according to one of the preceding claims, comprising a magnetic actuating means (20) assigned to the lever (14).

7. Apparatus (1) according to one of the preceding claims, comprising a filling-level sensor arranged above the entry opening.

8. Apparatus (1) according to one of the preceding claims, comprising a sensor which is arranged beneath the exit opening (32) and senses the through-passage of rod-like or spherical objects.

9. Apparatus (1) according to one of the preceding claims for separating magnetically attractable rod-like or spherical agitating elements.

10. Use of an apparatus (1) according to one of the preceding claims for separating magnetically attractable, rod-like or spherical agitating elements in an automatic analyzer.

11. Apparatus (100) for separating magnetically attractable, rod-like or spherical elements, comprising a planar surface, which can be moved along a predetermined movement path and has at least one permanent magnet (40) fitted on the rear side, and also comprising the following parts, which are arranged along the movement path and are in contact with the surface:
- a supply chamber (201) for accommodating a quantity of magnetically attractable elements;
- a first chicane (280), having an aperture which corresponds to the cross section of the respective magnetically attractable element and is intended for stripping off surplus magnetically attractable elements;
- a channel (300), having an entrance (320) and having a cross section for accommodating a magnetically attractable element, said cross section corresponding to the cross section of the respective magnetically attractable element;
- a hose (360), which is connected to the channel (300) and of which the inner cross section corresponds to the cross section of the respective magnetically attractable element;
**characterized in that**
an apparatus (1) according to one of Claims 1-9 is fastened at the end of the hose (360).

12. Apparatus (100) according to Claim 11, in the case of which the orientation of the hose (360) has a directional component in the direction of gravity (G).

13. Apparatus (100) according to either of Claims 11 and 12, in the case of which the movement path is a circular path, the planar surface and the circular path are located in a single plane, and the poles of the permanent magnet (40) are oriented tangentially.

14. Apparatus (100) according to one of Claims 11 to 13, in the case of which the planar surface is part of a circular plate (200).

15. Apparatus (100) according to Claim 14, in the case of which the circular plate (200), on its rear side, has a plurality of permanent magnets (40) on a circular path.

16. Apparatus (100) according to one of Claims 11 to 15, comprising a second chicane (260), which is in contact with the surface, is arranged along the movement path between the supply chamber (201) and the first chicane (280) and has a larger aperture than the first chicane (280).

17. Use of an apparatus (100) according to one of Claims 11 to 16 for separating magnetically attractable, spherical or rod-like agitating elements in an automatic analyzer.

18. Automatic analyzer having an apparatus (100) according to one of Claims 11 to 16.

## Revendications

1. Dispositif (1) d'individualisation d'objets en forme de barre ou sphériques, comprenant un levier (14) pourvu d'un trou (24), le trou (24) étant conformé de manière à pouvoir recevoir un objet en forme de barre ou sphérique, le trou (24) étant dans une première position du levier (14) en dessous d'une ouverture d'entrée et dans une deuxième position du levier (14) au dessus d'une ouverture de sortie, le levier (14) fermant, dans la deuxième position, l'ouverture d'entrée, **caractérisé en ce que** le levier (14) est monté flottant sur le dispositif (1) et le dispositif (1) a un premier dispositif de centrage comportant une butée de centrage pour centrer le trou (24) sur l'ouverture d'entrée dans la première position du levier (14).

2. Dispositif (1) suivant la revendication 1, dans lequel le levier (14) et monté flottant sur le dispositif (1) et le dispositif (1) a un deuxième dispositif de centrage comportant une butée de centrage pour centrer le trou (24) au dessus de l'ouverture (32) de sortie dans la deuxième position du levier (14).

3. Dispositif (1) suivant la revendication 1 ou 2, dans lequel le dispositif de centrage respectif a une saillie (36, 38) cylindrique de section circulaire, disposée autour du trou (24) sur le levier (14) et une cavité (26, 34) cunéiforme disposée autour de l'ouverture respective.

4. Dispositif (1) suivant la revendication 3, dans lequel la saillie (36, 38) respective est le prolongement d'un manchon (2, 30) cylindrique de section circulaire entourant l'ouverture respective.

5. Dispositif (1) suivant la revendication 3 ou 4, dans lequel la distance du milieu du trou (24) aux deux bords de la cavité (26, 34) correspond au rayon de la saillie (36, 38.

6. Dispositif (1) suivant l'une des revendications précédentes, comprenant un dispositif (20) d'actionnement magnétique associé au levier (14).

7. Dispositif (1) suivant l'une des revendications précédentes, comprenant un détecteur de niveau disposé au dessus de l'ouverture d'entrée.

8. Dispositif (1) suivant l'une des revendications précédentes, comprenant un détecteur, disposé en dessous de l'ouverture (32) de sortie, détectant le passage d'objets sphériques ou en forme de barre.

9. Dispositif (1) suivant l'une des revendications précédentes, d'individualisation d'éléments d'agitation en forme de barre ou sphériques pouvant être attirés magnétiquement.

10. Utilisation d'un dispositif (1) suivant l'une des revendications précédentes, pour individualiser des éléments d'agitation en forme de barre ou sphériques pouvant être attirés magnétiquement dans un appareil d'analyse automatique.

11. Dispositif (100) d'individualisation d'éléments en forme de barre ou sphériques pouvant être attirés magnétiquement, comprenant une surface plane mobile suivant un trajet de déplacement donné à l'avance et ayant au moins un aimant (40) permanent mis du côté arrière, ainsi que des parties suivantes touchant la surface et disposées le long du trajet de déplacement :
- un réservoir (200) de réception d'un certain nombre d'éléments pouvant être attirés magnétiquement;
- une première chicane (280) ayant un évidement correspondant à la section transversale de l'élément pouvant être attiré magnétiquement pour enlever par raclage des éléments pouvant être attirés magnétiquement en surnombre;
- une goulotte (300) ayant une entrée (320) et une section transversale correspondant à la section transversale de l'élément pouvant être attiré magnétiquement, afin de recevoir un élément pouvant être attiré magnétiquement;
- un tuyau (360) souple, qui est raccordé à la goulotte (300) et dont la section transversale intérieure correspond à la section transversale de l'élément pouvant être attiré magnétiquement;
**caractérisé en ce que**
un dispositif (1) suivant l'une des revendications 1 à 9 est fixé à l'extrémité du tuyau (360) souple.

12. Dispositif (100) suivant la revendication 11, dans lequel l'orientation du tuyau (360) souple a une composante dans la direction de la gravitation (G).

13. Dispositif (100) suivant l'une des revendications 11 et 12, dans lequel le trajet de déplacement est une orbite circulaire, la surface plane et l'orbite circulaire se trouve dans un plan et les pôles de l'aimant (40) permanent sont orientés tangentiellement.

14. Dispositif (100) suivant l'une des revendications 11 à 13, dans lequel la surface plane fait partie d'une plaque (200) circulaire.

15. Dispositif (100) suivant la revendication 14, dans lequel la plaque (200) circulaire a, sur une orbite circulaire, du côté arrière, une pluralité d'aimants (40) permanents.

16. Dispositif (100) suivant l'une des revendications 11 à 15, comprenant une deuxième chicane (260), qui touche la surface et qui est disposée suivant le trajet de déplacement entre le réservoir (201) et la première chicane (280) et qui a un évidement plus grand que la première chicane (280).

17. Utilisation d'un dispositif (100) suivant l'une des revendications 11 à 16, pour individualiser des éléments d'agitation sphériques ou en forme de bâtonnets pouvant être attirés magnétiquement.

18. Appareil d'analyse automatique ayant un dispositif (100) suivant l'une des revendications 11 à 16.
